# EUROPEAN PATENT APPLICATION

(11) **EP 4 807 983 A1**
(43) Date of publication of application: **16.09.2026**
(21) Application number: 25164000.9
(22) Date of filing: 15.03.2025
(51) Int. Cl.: H02P 25/06

(54) **POSITION MEASUREMENT IN LINEAR MOTORS FROM BACK EMF USING DIGITAL METHODS**

(71) Applicant: Summers, David, Bath B&NES BA2 4LS (GB)
(72) Inventor: Summers, David, Bath B&NES BA2 4LS (GB)

(57) **Abstract**

This patent gives several digital filters for taking voltage and current measurements used to drive a linear motor, and processing to produce an estimate of the motor position. The inputs and outputs need scaling by physical constants (*R, L* and *k_{T}*)*,* which take a multiplication, however the internal digital filters are implemented in integers using just additions, subtractions, and bit shifts. This means the algorithm is suitable for implementation on FPGAs and DSPs.

Three main algorithms are developed, one for driving the average output position measurement towards zero, a second for performing integration (but without white noise turning into a random walk), finally a modified form of the right shift operation which is symmetric under negation (need to avoid systematic effects).

The algorithms add little noise, in addition to the quantisation noise on the voltage and current measurements.

## Description

### 1.1 Background

Linear motors, often used on compressors, have a need to measure the waveform generated. This is used to detect distorted wave forms, or when an end stop is reached. Various technologies are used for this, here is consider using voltage and current measurement.

### 1.2 Problem

The relationship between voltage, current, and position comes from the back EMF - which can be measured by: $\dot{x} = \frac{{V}_{BEMF}}{{k}_{T}} = \frac{V - {V}_{drop}}{{k}_{T}} = \frac{V - I \left(R+sL\right)}{{k}_{T}} = \frac{1}{{k}_{T}} \left(V-IR-\frac{dI}{dt}L\right)$ Where the motor has impedance *R + sL,* and so the voltage drop across the motor needs to be removed to recover the back EMF measurement. So this gives the velocity, which needs to be turned into a position measurement. In US patent [1] this was solved using analogue electronics, which was common at the time.

Now increasingly Digital Signal Processors (DSPs) and Field Programmable Gate Arrays (FPGAs) are used, this patents concerns how to perform the processing using minimal resources, in particular minimising multiplications, whilst ensuring stability and minimal artefacts.

### 2 The Algorithms

### Algo 1 Zero Average=ZA()

The use of this filter is optional, it ensures the long term average is zero. This helps overcome random walk noise which could otherwise make the position slowly wander away from zero. ${y}_{0} = {y}_{1} - {y}_{1} / n + {x}_{o} - {x}_{1}$ where *n* will be usually taken to a value of 2*^{m}* - so it can be performed in right shifts.

Internally the vale of *y* and its history, need to be kept to have m fractional bits more than x; however on output the value of y only needs to be reported to the same accuracy as *x.*

### Algo 2 Integrate=Int()

This filter integrates the input, down to a certain frequency, then goes flat. The integral is to turn velocity into position, and the flat is also to limit any random walk. ${y}_{0} = {y}_{1} - {y}_{1} / n + {x}_{o}$ where *n* will be usually taken to a value of 2*^{m}* - so it can be performed in right shifts.

The value of *y* and its history need to have m more bits than *x* (but kept as integer, so extra bits are added as msb, unlike **Zero Average** where the bits are added below the lsb.)

### Algo 3 /n = /2^{m} Symmetry=RS()

The division by n, which is typically a power of 2, cannot be performed as a simple right shift, as this lack symmetry between positive and negative numbers, which is needed to give good behaviour. Two solutions are given:

```
       if (x>=0) then
          return (x>>m)
       else
          return (((x-1)>>m)+1)
       fi
     Or the form
       if (x>=0) then
          return ((x>>m)+1)
       else
          return ((x-1)>>m)
       fi
```

This should be used in both ZA() and Int()

### Algo 4 Assembly

The final position is estimated from $position = \frac{\left(Int\left(ZA\left(V-IR\right)\right)dt-IL\right)}{{k}_{T}}$

From the measured *V* and *I* both via an ADC. R and *L* are the resistance and impedance of the motor, and *k_{T}* is the motor constant. *dt* is the time step forward. Some of these terms can be merged, when known - and so should be able reduce the multiplications to two or three multiplications.

### 3 Features

The filters proposed in section 2 are generally well behaved, but also have some features to be aware of:
1. The underlying physics is a measure of velocity, so when integrating to position, there is an unknown offset, which can not be calculated or known. So absolute position cannot be known. Here the approach is to keep the average at zero via the ZA() filter.
2. A corollary of the first feature, is that the filter will only measure AC signals, so is only suitable for such signals.
3. The basic filter has been configured to use only addition/subtraction and right shifts. This means very efficiency implementations can be obtained for DSPs and FPGAs.
4. The remaining calculations, which are for converting the various terms to the same units, will typically require multiplications. These can typically be performed in integer implementations, taking care that this does not add noise. This is typically not hard, as the quantisation noise from ADC will typically dominate.
5. The integration filter does not perfectly integrate, due to the low frequency roll off. This at frequencies well above the cut off, introduces a very slightly time offset in position measurement. This should be one of the criteria in choosing the length of the filter (so the value of m or right shifts). The effect is small.
6. The signal to noise ratio, depends both on signal and noise. The signal is mainly the integral of voltage, so the gain on this through the filter is inversely proportional to the frequency of the signal. The noise on the other hand grows as $\sqrt{n} = \sqrt{{2}^{m}}$, now to get minimal phase shift (see previous point) the frequency of the signal needs to be well above the cut off frequency of $\frac{1}{n Δ t 2 π}$, and close to the logarithmic mid way between the cut off and Nyquist frequency. This means that typically the noise has grown a similar amount as signal.

### 4 Example Implementation

### 4.1 Introduction

This section gives background, theory, and builds a simulation to verify the methodology, test how accuracy the method is, to both statistical and systematic error.

This patent, in common with the US patent ref [1], considers how to measure linear motor position and velocity, from measurements of the drive voltage and current. In common with ref [1] it estimates the voltage drop across the motor, from the current and the motor impedance. Using the voltage drop across the motor impedance, this can be subtracted from the drive voltage, to obtain the back EMF, which in turn is proportional to the velocity of the motor. Ref [1] has now expired, but is an important reference all the same.

Where this patent differs from ref [1], is that ref [1] solves the resulting equations, using analogue electronics. In this patent the equation are solved using digital processing. In a space context the usage of processors/FPGA is increasingly common, and if they have resources free - and using these for position measurement takes less board space, and makes the electronics simpler.

However FPGA, many space processors, and DSPs often can only easily do integer arithmetic. So the algorithms here have also been implemented in integer arithmetic without loss of accuracy, beyond quantisation noise. Example code is shown, targeted at the Texas Instruments MSP430 architecture.

In addition the noise propagation through the filters, which enables a signal to noise ratio to be calculated.

### 4.2 Linear Motors, properties

Linear Motor are often used where linear motion is required, e.g. when pistons need to be driven. This is often needed of certain space coolers for pumping gas. Motors generate force by magnetic fields, which usually means winding wires, which increases the strength of the magnetic field - but also causes the winding to have inductance. The length of the wire also causes resistance. This means that motor typically has impedance: ${Z}_{M} = R + sL$ where this has been shown in the Laplace transform Now the Back EMF is proportional to velocity: ${V}_{BEMF} = {k}_{T} \dot{x} = {k}_{T} sx$

But because the motor has impedance if any current flows, there is a voltage drop across it: ${V}_{drop} = {IZ}_{M}$ and so the voltage across the motor is: $V = {V}_{BEMF} + {V}_{drop}$ and this means that the external voltage, only gives back EMF, when *I* = 0. Also typically motors are driven by voltage control, and so the drive voltage is set by the drive electronics, so how can it be proportional to velocity?

### 4.3 Motors, in Space

Drive electronics used in space, are often driven by Pulse Width Modulation (PWM). This is a very efficient as it wastes very little energy, however it has two short periods at the +ve or -ve rail, which repeat. Due to this being at short periods, and typically square waves, it generates EMC radiation, which typically breaches a requirement on emitted radiation. So typically a *2nd* order low pass EMC filter is used. This gets hard to have a low frequency roll off, without a large inductance - which has mass and volume consequences; so often the filter is just used to roll off the corners on the PWM signal, so higher harmonics of the primary PWM frequency.

However motor windings often have capacitance between the windings and Earth. This means that often the capacitance charges to the +ve and -ve rail, if just some of the PWM base frequency is there. This causes alternating current (AC) to flow between the motor and Earth; again in space this often breaches requirements on the leakage current.

As a result, it hard in space not to filter all of the PWM frequency. In the simulation (lower down the document) PWM frequency has been set to *100kHz* and a second order low pass EMC filter set to *10kHz.*

### 4.4 Velocity Measurement

The concept the measuring position via Back EMF is to both measure both voltage and current, then: $\dot{x} = \frac{{V}_{BEMF}}{{k}_{T}} = \frac{V - {V}_{drop}}{{k}_{T}} = \frac{V - I \left(R+sL\right)}{{k}_{T}} = \frac{1}{{k}_{T}} \left(V-IR-\frac{dI}{dt}L\right)$

So this shows that the velocity can be estimated from *V, I* and $\frac{dI}{dt}$.

To illustrate this, a simulation has been preformed, with parameters:
- A mass on a spring,
- with resonant frequency of 100Hz and a Q=7
- Drive by a linear motor
- with *k_{T} =* 10.7*N*/*A, L* = *2.4mH,* and *R* = 4Ω
- Voltage driven by PWM
- PWM frequency 100kHz, drive rail at 15V
- PWM between 0*V* and ±*Vᵣₐᵢₗ*
- 2nd order low pass output EMC filter with corner frequency 10kHz

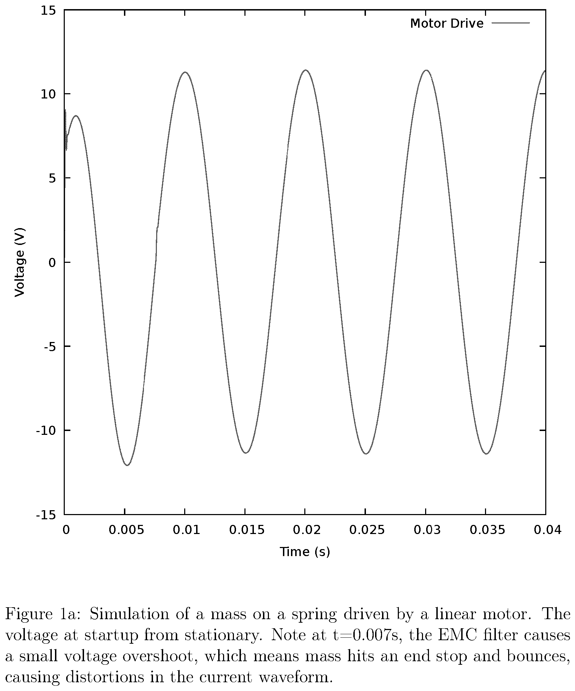

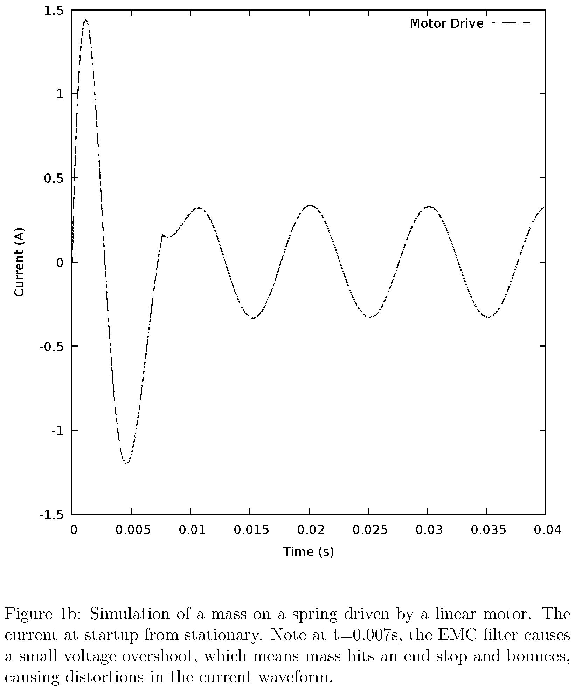

Consider the voltage and current used to drive the motor, shown in figure 1; where the PWM voltage drive has been set to *V* = 11.4V sinusoidal of *100Hz.* In the voltage output, as this passes through and EMC filter at 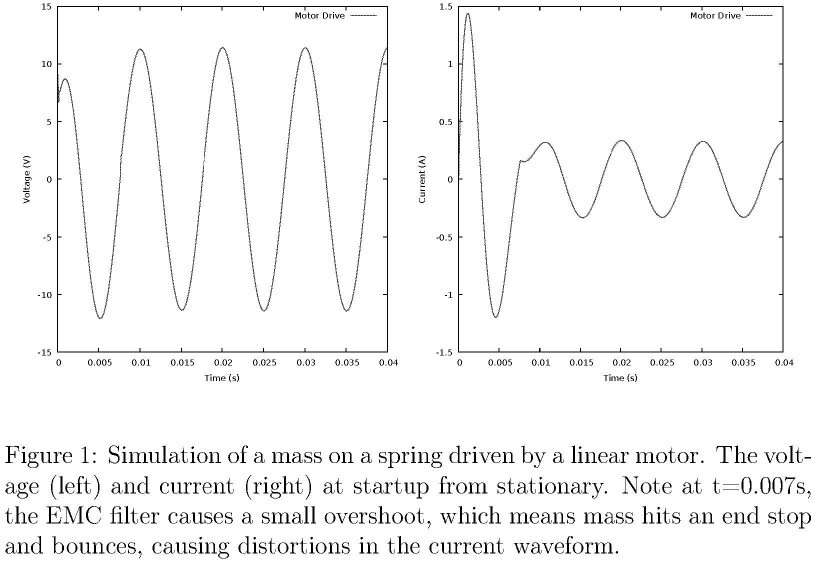 *10kHz,* it takes a short period to settle down, and in particular the first negative sinuosity goes down to about -12V. Then on the current, initially as the mass is stationary, a large current flows up to just below 1.5A. The interesting feature happens at t = 0.0077s when the mass hits an end stop and bounces off with half the velocity, here can be seen the sudden change is slop of current, there is also a jump in voltage (the discontinuous hitting of an end stop, puts a rapid change in back EMF, which affects the voltage, and the drive has to go via the EMC filter).

So it is these changes in the voltage and current that are sensitive to the velocity.

### 4.5 Position Measurement

The problem with equation 9, is the $\frac{dI}{dt}$ term. Typically the current can be measured (voltage across a small sense resistor), but not the derivative. Here we set the sampling period at the same frequency as the PWM, so 100kHz. On this time scale the current only varies quite slowly (it takes 1000 samples to go through a full sinusoidal), this means that in the ADC it will change only few bits. This will increase the effect of noise, so here an alternative form is considered. $x = \frac{1}{{k}_{T}} \left(\int \left(V-IR\right) dt - IL\right)$

By integrating the equation to get position, the derivative of current becomes a straight measurement, the complication is that *V - IR* needs to be integrated. Integration though generally will give smaller noise, so such a transformation is worth considering. It should be noted that as back EMF does no know the offset of the position, this can not be measured - so an offset is to be expected.

Now when integrated, white noise on *V* and *I,* will become a random walk on position. This is not desirable, especially as the position of the mass is expected to be a sinusoidal; so eventually the random walk will dominate over the signal. The trick here is to just integrate down to a certain frequency, in the Laplace representation, $x = \frac{1}{{k}_{T}} \left(\frac{V - IR}{s}-IL\right) \to \frac{1}{{k}_{T}} \left(\frac{V - IR}{s + a}-IL\right)$

The $\frac{1}{s + a}$ will stop the integration at a frequency below the sinusoidal being measured, however will keep what random walk it has acquired. If instead the desire is to have the long term average be zero, this can be performed via, $\frac{1}{s + a} \to \frac{s}{s + a} \frac{1}{s + a}$

### 4.6 To a discrete time step

The Laplace transform is continuous in time, but the ADC samples of voltage and current, are discrete. So for implementation, this is implemented as the inverse z transform: $\frac{s}{s + a} \frac{1}{s + a} \to \frac{1 - {z}^{- 1}}{1 - {az}^{- 1}} \frac{1}{1 - {az}^{- 1}}$

The z⁻¹ variable acting on a variable, takes its discrete version at the previous time step. So the z transforms above become Infinite Impulse Response filter functions. And for speed of calculation on a DSP/FPGA, $a = 1 - \frac{1}{n} = 1 - \frac{1}{{2}^{m}}$ Where the $\frac{1}{{2}^{m}}$ can be implemented in right shifts.

### 4.7 Frequency Response

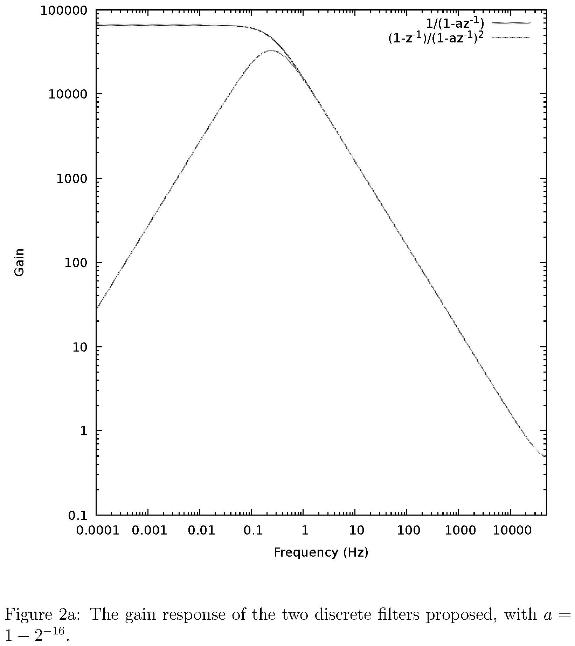

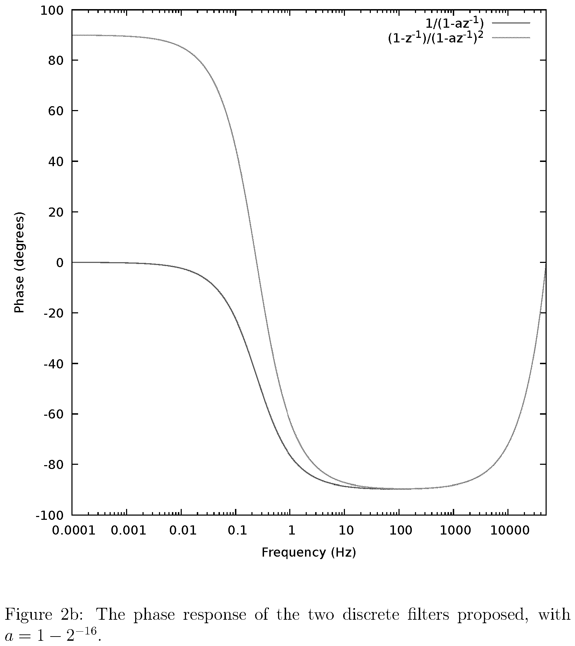

The gain and phase response of the two z transforms proposed is shown in figure 2. This is plotted for a sampling period of 100kHz, the target on the Texas Instruments MSP430 device, so the Nyquist Frequency is 50kHz. For both a = 1 - 2⁻¹⁶ - which has a very efficient implementation on the MSP430, discussed below.

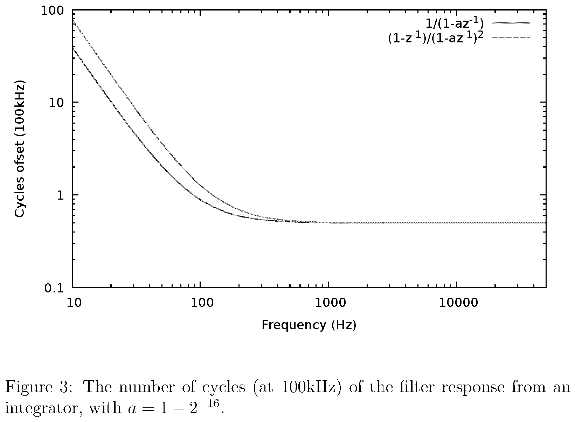

For both transforms, at 100Hz (the primary driving frequency) the phase response is very close to 90° - as we need for performing the integration to turn velocity into position. The response with a zero at DC (0Hz), as as this has a phase shift through 180° the phase response is approximately double 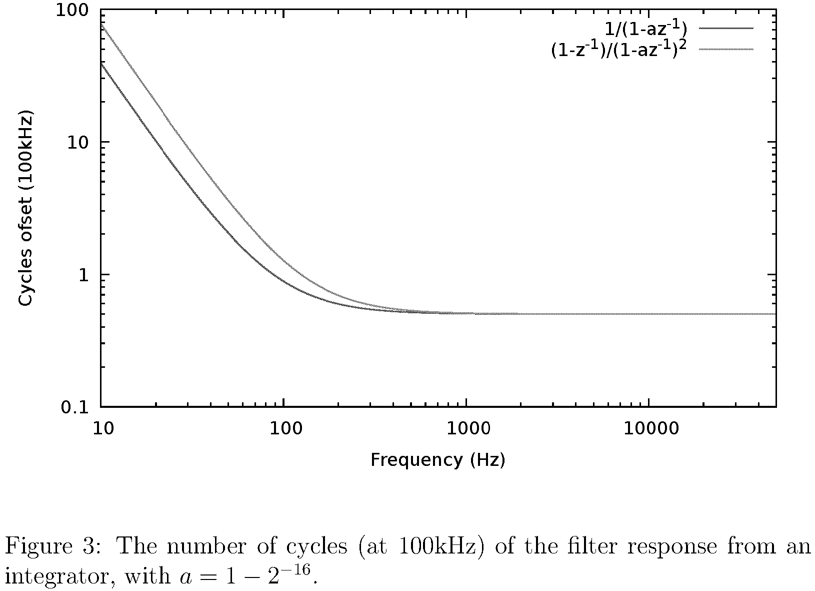 that of the simpler filter. Similarly shown in fig 3, is the number of cycles offset that the filter have from the desired integrator. For frequencies above a few hundred Hz, there is a flat $\frac{1}{2}$ cycle delay. At 100Hz (the nominal drive frequency considered here), the integrator with a flat below 1Hz has about 0.89cycle offset, whereas with a zero at 0Hz the offset is 1.27cycles - so higher but still just a slight delay. This rapidly increases at lower frequencies

### 4.8 Noise considerations

What is important, is how much noise do these IIR filters produce, the simplest way of estimating this, is to expand the z transform as an infinite power series in z⁻¹, this corresponds to an infinite series of prior terms in the input function. Now if we take the noise on the input function to be white, it will have a certain variance on each input, and the variances will be independent - this means it can be summed for z transform, to give the variance gain given by the filter. (However not the output will no longer be white, due to

**Table 1: The gain in variance after passing through the digital filters, with the input noise being white.**

| z function | var gain | large n |
|---|---|---|
| $\frac{1}{1 - {az}^{- 1}}$ | $\frac{1}{1 - {a}^{2}}$ | $\frac{n}{2}$ |
| $\frac{1 - {z}^{- 1}}{1 - {az}^{- 1}}$ | $\frac{2}{1 + a}$ | $\frac{2 n}{2 n - 1}$ |
| $\frac{1}{1 - {az}^{- 1}} \frac{1 - {z}^{- 1}}{1 - {az}^{- 1}}$ | $2 \frac{{\left(1-a\right)}^{2}}{{\left(1-{a}^{2}\right)}^{3}}$ | $\frac{n}{4}$ |

the frequency response of the filter).

As expected the two integrators increase noise in proportion to their length, the integrator with a zero at 0Hz, has slightly less noise (equivalent to filter with half the length, which is minimal). Also shown is the effect of the high pass filer used to put a zero at 0Hz - noise going though the filter is almost unaffected (which is understandable, for most of its frequency response it has unit gain, until switching off going towards 0Hz).

### 4.9 Integer implementation

When implementing the z filters using integer arithmetic, it is worth splitting the integrator with a zero, into two parts - due to the accuracy need for each part. Consider the high pass filter, $\frac{1 - {z}^{- 1}}{1 - {az}^{- 1}} ↦ {y}_{0} = {y}_{1} - {y}_{1} / n + {x}_{o} - {x}_{1}$

If we ignore the division term, so *y*₀ = *y*₁ *+ x₀ - x*₁, this has solution *y = x + c* for some constant c. So the output y tracks the input *x* and, this explains why the variance is almost unchanged. However the *y*₁/*n* is far smaller than *y* - and so a fractional part of *y* and so also of *x.* So both *x* and *y* need fraction terms, even though the error on *y* is similar to *x* (so with same quantisation noise). These two are balanced with the integer code:

```
 static inline int16_t highpass(int16_t in)
 {
  static int16_t inp=0;
  static int32_t outp=0;
  int32_t out=outp-rs(outp)+(((int32_t) (in-inp))<<16);
  inp=in;
  outp=out;
  return (int16_t)(rs(out));
  }
```

So the input variables (and history) are both 16bit, but when processed in the output variable they are shifted to the upper 16bits of a 32bit output variable. The /n is performed by "rs(outp)" that is conceptually a "(outp)>>16" and so only affect the lower 16 bits. So on an MSP430 architecture, that naively has 16bit integers - then the 32bit variables have to be split between two 16bit variables. This would mean the above function could be very efficiently implemented on an MSP430 device, with no shifts, and just copying 16bit locations. On another architecture DSP, or an FPGA which can efficiently implement shifts, then other powers of two could be used. On processors with an efficient divider even a general form for n could be used, however usually a power of two is sufficient for the filtering which can be done by a barrel shifter.

The integrator, $\frac{1}{1 - {az}^{- 1}} ↦ {y}_{0} = {y}_{1} - {y}_{1} / n + {x}_{o}$

Naturally sums until *y* grows so *y*/*n* is the same size as a typical x input. Now *x* is a 16bit integer, and with *n* = 65536, *y* must always fit in an 32bit integer. So this gives implementation,

```
 static inline int32_t integ(int16_t in)
 {
  static int32_t outp=0;
  int32_t out=outp-rs(outp)+((int32_t) in);
  outp=out;
  return out;
```

Which is similar to the low pass filter, with the difference that the output variable is 32bit. This means that the /*n* term doesn't need to be go fractional, but can stay as an integer - so the input doesn't need to be left shifted.

And the final bit of integer maths is the right shift *rs(x)* = *(x* >> 16) when implemented like this - the high pass filter is no longer to take the average to zero. This is traced back to (-1 >> 16) = -1, whereas (1 >> 16) = 0, which is the correct integer arthritic; however the asymmetric behaviour causes the problem. This is solved by using an unusual integer 2⁻¹⁶:

```
 static inline int32_t rs(int32_t in)
 {
  return (in>=0)?(in>>16):(((in-1)>>16)+1);
  // return (in>=0)?((in>>16)+1):((in-1)>>16);
  }
```

Where the main code used is uncommented, the commented code gives a different (slightly less accurate) version of 2⁻¹⁶, both give very similar errors. The commented code for most ISA executes the same number of CPU cycles if *in* > 0 or *in* < 0. With both, the critical behaviour is rs(-in)==-rs(in).

### 4.10 Forming the input, and conversion to physical

The rest of the code, is just assembling the input, and making the output suitable for for comparison.

```
    int16_t IntV=(int16_t) (floor((double) (VCf)/12.0*2048.0+0.5));
    int16_t IntI=(int16_t) (floor((double) (lILm[0]+lILm[1])
                                               /3.0*2048.0+0.5));
    int16_t IntVIR4=(IntV<<4)-(IntI<<3);
```

The integer versions of *V* and *I* would be formed by the ADC measuring them, these produce a signed integer, where 12V gives a 2048 reading, as does 3A, both taken from 1. *V - IR* is done to the same scaling as voltage multiplied by 16, as the ADC reading is a 12bit number - so can be scaled by 4 bits to the most significant bits. The current gain notes that 1.5*A**4Ω/12*V* = 0.5 (with Current for 1 motor, and not the pair), so is a factor of 2 down on voltage hence is sifted by 1 bit less than the voltage. In a physical system, it is not unusual for the resistance to be unknown, when the electronics, ADC, and processing are designed - in such a case where R is measured on the integrated system, it may well be easier to implemented it as a multiplier.

To then extract the position: double Estpos=(((double) EstIntVIR)*dtpwm*12.0/16.0 -((double) IntI)*3.0/2.0*Lm)/2048.0/kT;

The values here are *dtpwm =* 10⁻⁵*s* - the time stepping forward; *Vₘₐₓ* = *12V* the voltage that gives the maximal ADC reading 2148; and /16 reversing the effect of the << 4; these turn the sum into the integral, and scale back into voltage terms. The inductor term does the same, and is scaled back to the original *IL* units, finally all scaled by the motor constant, to give the estimated position.

With both these function, the current needs to be multiplied by *R* and *L* respectively, it may be possible to implement on of these as a shift, but more typically both these will require a multiplication. The multiplication of the integral, and the scaling by *k_{T}*, real just scales the result, to physical units - in implementation, it may well be acceptable to use the unscaled result with unusual units.

### 4.11 Performance of the filter

In this section the algorithms have been implemented in a simulation discussing in section 4.4. The algorithm developed has some known artefacts:
- The position measurement has no knowledge of any offset, so it takes the average value to zero, which could introduce an offset.
- The integrator is not perfect, in section 4.7 there was shown to be an expected time offset of 1 cycle (at 100kHz).

So ideally the simulation should show this, and the question of how well the integer implementation is of algorithm. To answer these three variables have been plotted:
- The position is simulated, and so reported as the exact position.
- The z transform has been implemented in floating point numbers, this is to confirm how well it fits the actual position, and does it have the artefacts predicted.
- The z transform, implemented integer arithmetic, exactly as documented above.

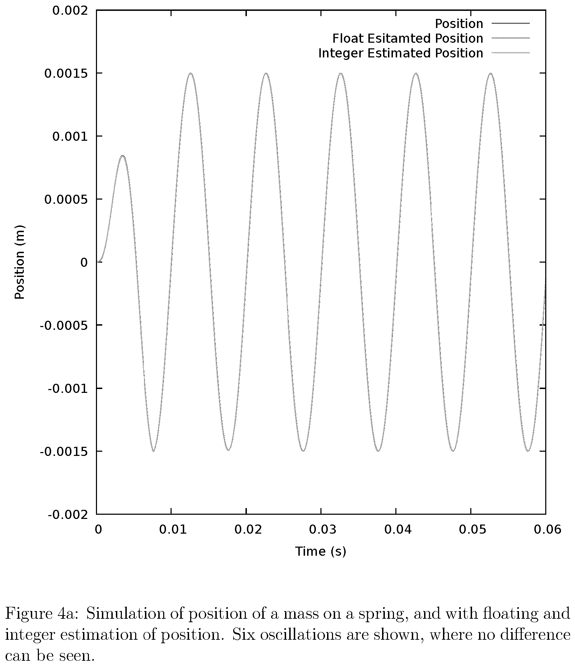

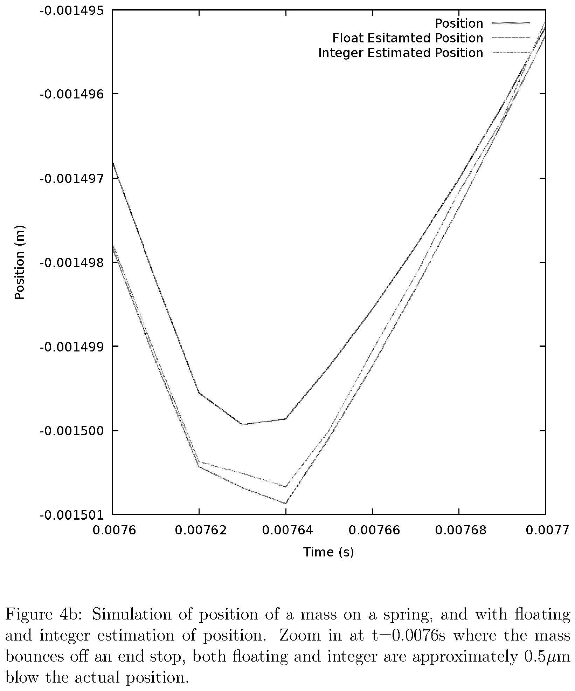

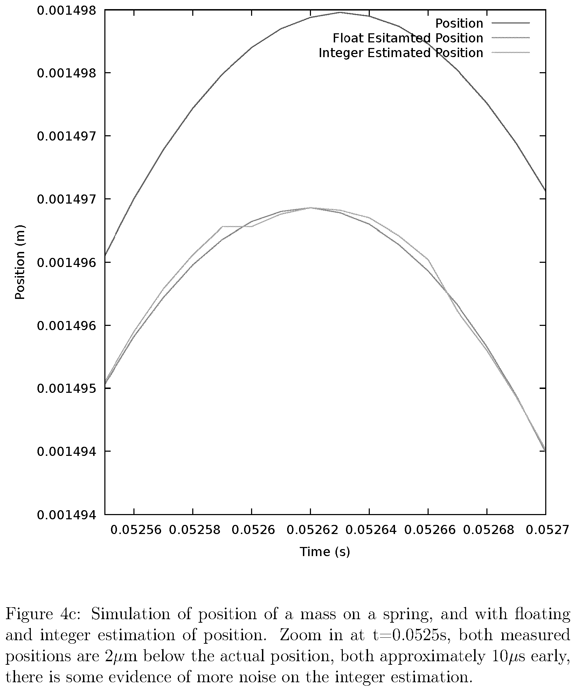

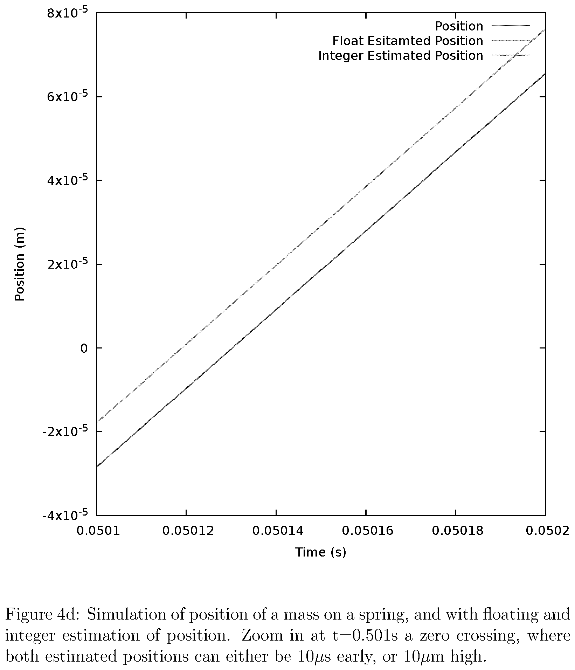

Plotting these from start up, and with zoom in on various frequencies, is shown in fig 4. What can be seen, is that both floating and integer give very good estimation of position, there is some evidence of a slight offset in position and time. The difference between floating and integer versions of position measurement, is exceptionally minimal, with maybe a little bit of noise on the integer version, which as it has come from 12bit ADC measurements, is expected to be quantisation noise (see below, where this is confirmed). As regards the offsets:
- The offset in position is to be expected, the algorithm is designed to have an average position of zero, the simulation also was written with the spring at zero force at zero position. So both should have the same offset, so the simulation shows an offset error of a few *µ*m, on a measure amplitude of 1.5mm, so about 0.1% effect.
- The offset in time, the analytic calculation of the time offset, presented in figure 3, where the phase response of the integrator meant was 5-10*µ*s short (e.g. early). The response of position measurement is consistent with this.

### 4.12 Quantisation and Johnson Noise

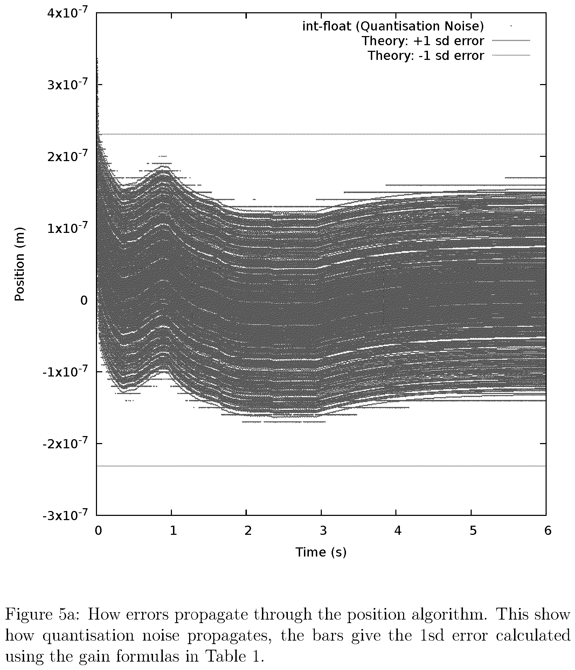

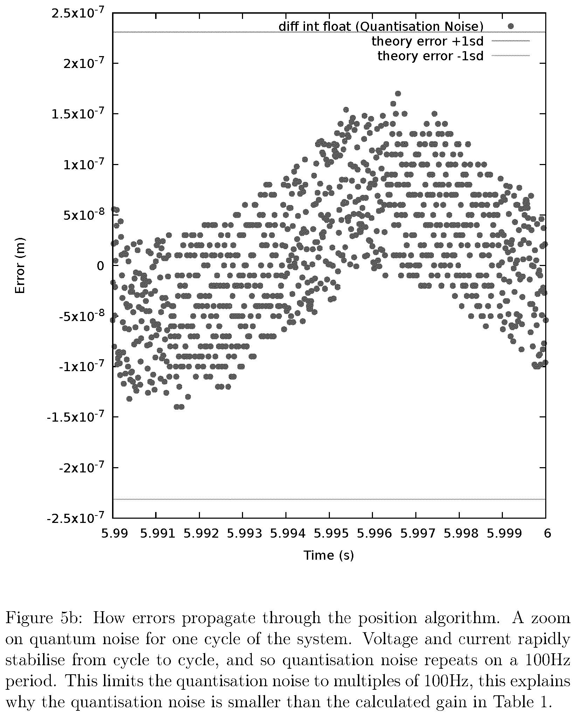

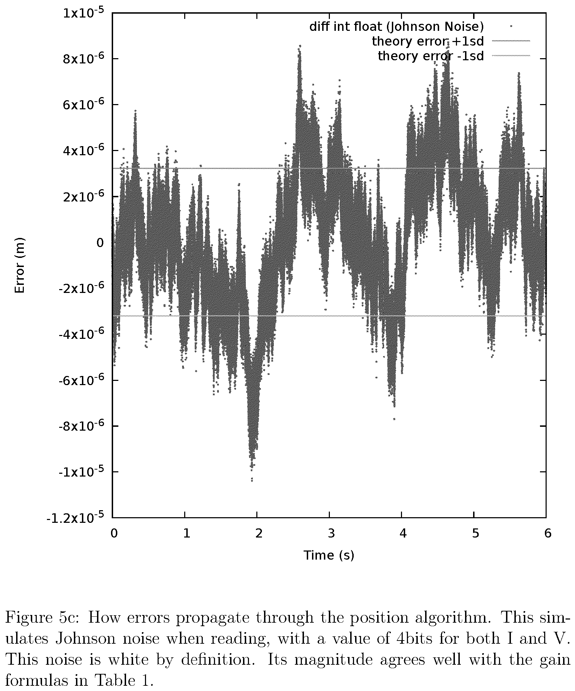

The simulation show a very minor noise on the integer implementation of the filter, in particular in relation to floating filter (the noise was far small than 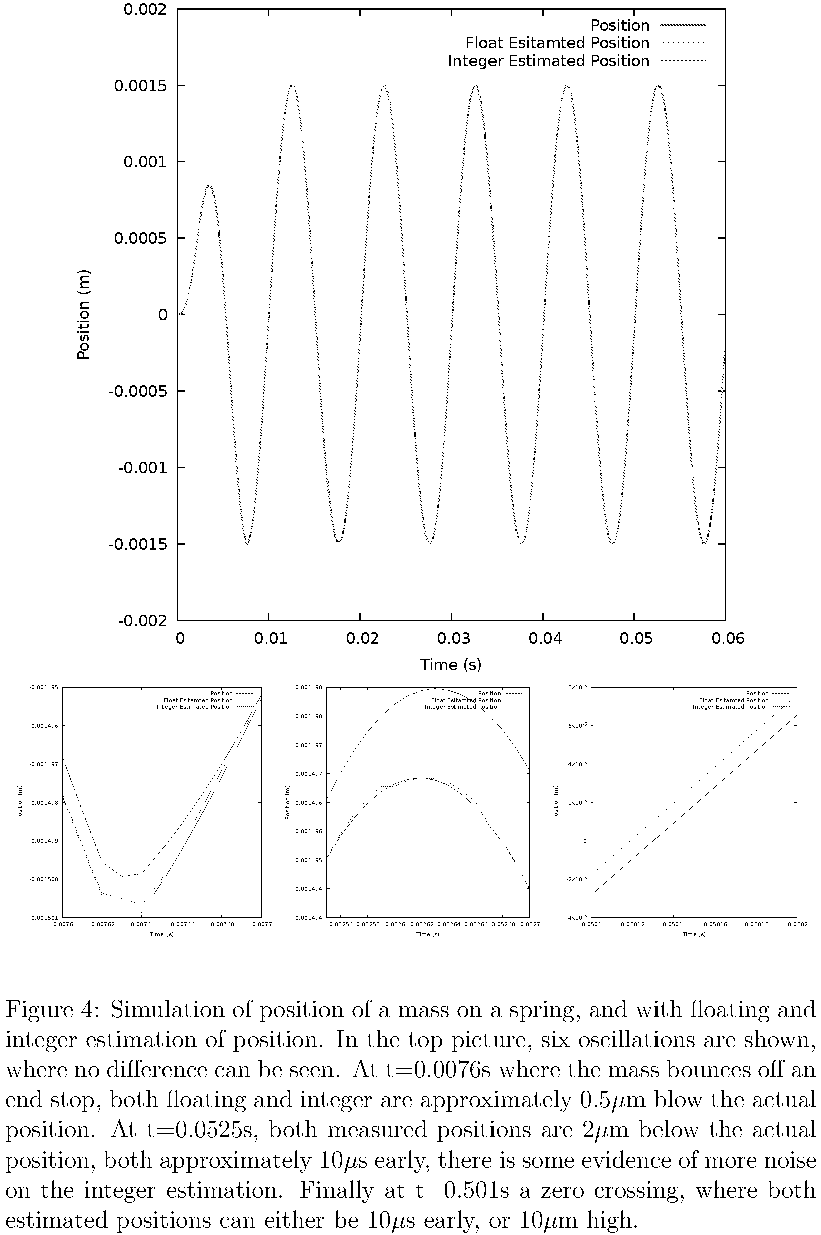 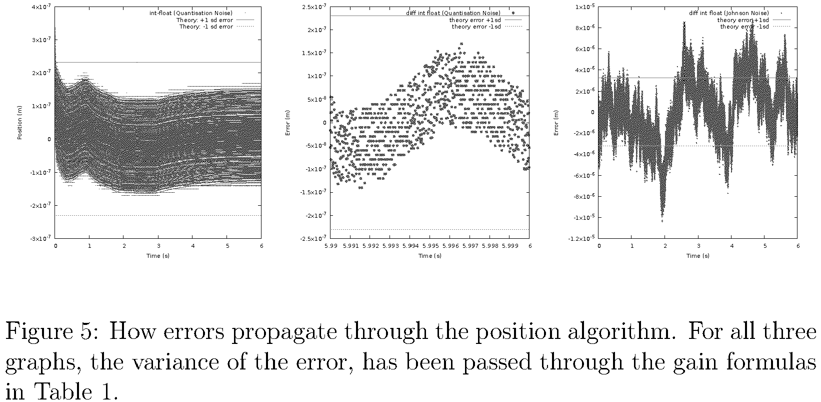 the offset in the algorithm). Now the main noise introduced into the integer implementation, is quantisation noise, the input into the algorithm is a 12bit signed integer - and the quantisation introduces noise with variance of $\frac{1}{12} {bit}^{2}$. So there is the question of how this propagates through the position filter, is it the cause of the noise on integer representation. This is shown over the simulation in figure 5, also shown is same plot over the last cycle. Then a related noise issue, is how Johnson noise in measurement (e.g. thermal noise in the electronics) produces noise in measurement; here the Johnson noise has been modelled on the ADC input, for both voltage and current where the result is a variance of 4²*bit*², with normal distribution, and totally white (so uncorrelated errors); this is also shown in figure 5.

Now what is interesting in the results, is that the quantisation error is significantly smaller than the expected value of the noise, and also has a large amount of structure to the noise. The reason for this, is actually quite easy to understand. The driving voltage waveform is set up to be a sinusoidal with frequency of 100Hz - which is exactly 1000 PWM steps. So every 1000 PWM timesteps, the PWM signal repeats. The mass on the spring, rapidly reacts to this - and in the simulation it also rapidly converges on repeating at 100Hz (1000 PWM cycles); and this in turn means that both driving voltage and current also rapidly enter a repeating state. This in turn means the the quantisation noise, repeats at 100Hz, which in turn means that the quantisation noise enters with noise at multiples of 100Hz. This is shown in the centre of figure 5, where the noise over one cycle is shown - this noise repeats every 0.01s. This means that in the integrator, the noise is only integrated down to 100Hz, which means the gain is not as high as for white noise.

Turning next to the Johnson noise, shown on the right of figure 5. Here the noise is exactly the magnitude the error propagation formula, also the noise looks like a random walk, but bounded to stay close to zero. This is exactly how we would expect noise to be propagated through the filter. This also shows that the estimated variance gain, is accurate.

In a physical implementation, the current and voltage measured is less likely to exactly repeat, so for SNR considerations, better to use the calculated error. The predicted error of 231nm, compared to the amplitude of the oscillation of 3mm, gives a SNR of almost 13000, this is compared to the SNR of a full scale 12 bit number of 14000 - shows the algorithm is performing well as the voltage and current measurements which are well below the maximal value of the ADC.

### 4.13 Conclusion

The concept here, was how to estimate the position of linear motor, from digital measurements via digital processing. In space this is mainly via integer processing on FPGA/DSP and low power CPU.

The integer filter implemented here, obtain almost exactly reproduces the real version, with the addition on quantisation noise. As measurement of voltage and current in space is typically via ADCs, the quantisation has already happened, as so there is almost no penalty for doing the calculation in integer arithmetic.

The filter itself has minimal effects, it is designed to integrate the input, but only down to a certain frequency depending on the filter parameters. The range over which the signal is integrated has two effects:
- The lower the frequency range (e.g. the wider the integral frequency range), the more an noise on the signal is amplified towards a random walk. This limits how wide the frequency range should be.
- The frequency range affects how close the filter is to an integrator, so if it gets too close it affects the time response of the position measurement.

These two compliment each other, so consideration of both needs to be done, before setting the parameters of the filter.

With the example code (100kHz sampling frequency, for measuring a 100Hz signal) setting the downshift to 16bits, give the bandwidth down to about 0.1Hz. This kept the noise level similar to input ADC variables, and made the signal about 10*µ*s away from an integrator. This shows a minimal effect can be obtained.

The filter has an option of including a high pass filter, which can be used to ensure the average measured position tends towards zero, use of this is optional, it gives slightly narrower bandwidth, less noise, but greater time signal offset - so the main use is for taking out any measured offset.

The integer algorithm has been implemented so internal to the algorithm, all divisions are performed by a power of two, and so can be implemented very efficiently on DSP/FPGA. The division has to be modified slightly to ensure it is symmetric under negation, two methods are proposed.

A few general multiplications are needed, some for combining current and voltage measurements *(R* and *L), dt* for combining integral term with the instantaneous measurements, and *k_{T}* the absolute scaling. Now if the overall scale to physical units is not performed, then this reduces to only two multiplications (to combine the 3 different terms *V, IR* and *IL),* which could few cpu cycles.

### References

[1] Robert W. Redlich, Method and apparatus for measuring piston position in a free piston compressor US Patent 5342176 30th August 1994

## Claims

**1.** Digital processing for producing an estimate of linear motor position, from measurements of the voltage and current used to dive the motor.

**2.** The processing is separated into several routines, those for integrating, filtering, and combining terms.

The integration and filtering filters need only need additions, subtractions, and (modified) right shifts; and so can be efficiently implemented on FPGAs and DSPs.

**4.** Combining terms, typically will need a multiplication, which describes terms like impedance for converting current to voltage variables.

**4.** The noise on the position, is driven by the bandwidth of the integral filter.

**5.** The phase offset from the filter for high frequencies is a very small constant time step, as the roll off frequency is approached this increases rapidly, and so to avoid this the cut off frequency should be well below the desired measurement frequency.

**6.** Claim 4 and 5 need to be balanced when setting the cut off frequency of the filter, to ensure that the noise and time offset are acceptable.
